(19) Europäisches Patentamt
European Patent Office
Office européen des brevets

(11) Publication number: 0 256 369 A2

# (12) EUROPEAN PATENT APPLICATION

(21) Application number: 87110939.3

(51) Int. Cl.4: C08F 220/32 , C09D 5/03

(22) Date of filing: 28.07.87

(30) Priority: 04.08.86 US 892302

(43) Date of publication of application: 24.02.88 Bulletin 88/08

(84) Designated Contracting States: AT BE CH DE ES FR GB IT LI LU NL SE

(71) Applicant: THE GLIDDEN COMPANY
900 Huntington Building 925 Euclid Avenue
Cleveland Ohio 44115(US)

(72) Inventor: Abbey, Kirk J.
P.O. Box 5527
Cary North Carolina(US)
Inventor: Craun, Gary P.
409 Crescent Drive
Berea Ohio(US)
Inventor: Ross, Alistair J.
15628 Creekwood Lane
Strongsville Ohio(US)

(74) Representative: Baillie, Iain Cameron et al
c/o Ladas & Parry Isartorplatz 5
D-8000 München 2(DE)

## (54) Glycidyl acrylic powder coatings.

(57) A suspension process for producing suspension polymers useful in powder coatings comprising reacting ethylenically unsaturated monomers, including glycidyl monomers, in the presence of 0.1% and 15% (preferably between 2% and 5%) of a tertiary mercaptan to prevent substantial cross-linking with the glycidyl group on the glycidyl monomer to produce a non-gelled suspension polymer.

EP 0 256 369 A2

# GLYCIDYL ACRYLIC POWDER COATINGS

## BACKGROUND OF THE INVENTION

This invention relates to glycidyl acrylic resins particularly suitable for use as clear or pigmented powder coatings.

Powder paints are ordinarily manufactured from raw batch ingredients comprising resinous binders, opacifying and filler pigmentary solids, plasticizers, and other additives to provide opacity, good film properties, and adhesion to substrates. The raw batch ingredients are uniformly mixed, formed into coherent extrudate by hot extrusion, and then comminuted to form small particle powder paints which are ordinarily free flowing at normal room temperature. Powder paints usually are uniform small powders passing 140 mesh or less than about 106 microns. Powder paints contain little or no fugitive solvents and depend upon their own inherent characteristics of the powder to melt, level, coalesce, and fuse to form an attractive coherent film on the substrate. The powder must not fuse in the container and cannot be subjected to cold flow so as to maintain individual powder particles prior to use.

In recent years, thermosetting powder paints have become particularly suitable for use in commercial industrial process particularly since powder paints are essentially free of organic solvents whereby economic and social benefits are achieved by reduced air pollution, reduced energy use, and reduced health and fire hazards. Present commercial powder coatings often exhibit poor weathering properties although some expensive powder paints can obtain satisfactory weathering. Other difficulties often encountered in powder paints are caking or blocking of the powder in use and other mechanical application properties.

Glycidyl functional acrylics are ideally suited for use in powder coatings. Resins can be cured with carboxyl containing crosslinking agents at 350°F., and when catalyzed can be cured as low as 250°F. Resins can be formulated to have high gloss, good weathering, and acceptable hardness. Glycidyl functional polymers which are currently available do not, however, have good pigment wetting properties. Carboxylic acids such as acrylic and methacrylic acid can impart good pigment wetting properties to most acrylic polymers, but glycidyl monomers such as glycidyl acrylate and glycidyl methacrylate react with these acids at temperatures as low as about 70°C. Polymers having a melt viscosity which is suitable for use in powder coatings are generally made in bulk at temperatures of 120 to 200°C. Under these conditions acid and glycidyl will react rapidly and crosslink an acrylic resin to an intractable gel. Resins which are suitable for use in powder coatings are too viscous to prepare in bulk at temperatures below 80°C., but suspension polymerization is an ideal process. Molecular weight control at 80°C. can generally be obtained in acrylic polymerizations with mercaptan chain transfer agents. Most mercaptans, however, react with the oxirane functionality in glycidyl monomers, significantly reducing the number of crosslinking sites on the polymer, and hence the quality of the coating produced.

The prior art generally suggests copolymers of acid and glycidyl functional polymers, but does not suggest suspension polymerization as a process, or tertiary mercaptans specifically for molecular weight control with glycidyl or glycidyl/acid functional acrylics. A typical patent, U.S. 3,223,670, discloses a glycidyl/acid acrylic copolymer, but the resin composition is limited by large quantities of vinyl acetate, which presumably provides molecular weight control. Thiophenol has been used to prepare glycidyl functional polymers (no acid monomers are present) at low conversion for kinetic studies (S. Paul and B. Randy Macromolecules, 9, 2, 337 (1976). Acid/glycidyl polymers prepared in most references are purposely crosslinked during the polymerization reaction to form microgels or crosslinked membranes.

It now has been found that tertiary mercaptans such as t-dodecyl mercaptan can be used in glycidyl and glycidyl/acid suspension polymerizations with much less loss of oxirane or acid functionality than for other mercaptans. Tertiary alkane mercaptans consumed less oxirane during the polymerization reaction than hydroxyalkane and linear alkane mercaptans.

Polymerizations were carried out at 50 to 70°C. in a suspension process with suitable polymerization rates obtained at these temperatures with Vazo 52, a low temperature azo initiator. The suspension products were especially easy to process through extrusion and grinding equipment commonly used to prepare powder coatings. Clear and pigmented coatings were electrostatically sprayed onto test panels and cured to give films with good solvent resistance, gloss, and hardness. These and other advantages of the invention will become more apparent by referring to the detailed description of the invention and the illustrative examples.

SUMMARY OF THE INVENTION

Briefly, the composition comprises glycidyl acrylic copolymers useful in powder coatings and produced by suspension copolymerization of monomers at temperatures preferably between 50°C. and 80°C. in conjunction with a tertiary mercaptan chain transfer agent. Use of the tertiary mercaptans provide good molecular weight control for glycidyl acrylic copolymers and negligible loss of epoxy groups from epoxy-chain transfer agent reactions. The preferred copolymers comprise on a weight basis copolymerized monomers between 0% and 20% of copolymerizable acids and 5% and 50% of a glycidyl methacrylate or acrylate monomer, with the remaining being other ethylenically unsaturated monomers. Improved gloss can be obtained by the inclusion of 1,10-decane dicarboxylic acid (DDA) in the powder coating formulation.

DETAILED DESCRIPTION OF THE INVENTION

The composition comprises a suspension copolymer of monomeric acrylic or methacrylic acids, or other copolymerizable acids glycidyl monomers such as acrylates or methacrylates, other ethylenically unsaturated monomers, and a tertiary mercaptan.

Referring first to the monomeric acids, acrylic and methacrylic acids comprise acrylic acid, methacrylic acid, ethacrylic acid and similar alkyl unsaturated acids, alpha-cyanoacrylic acid, crotonic acid, beta-acryloxy propionic acid, hydrosorbic acid, sorbic acid or alphachlorosorbic acid, cinnamic acid, beta-styryl acrylic acid, hydromuconic acid, itaconic acid, citraconic acid, fumaric acid, mesaconic acid, muconic acid, glutaconic acid, aconitic acid and similar ethylenically unsaturated organic carboxylic acids. Acid anhydrides such as maleic anhydride are also suitable.

Referring next to the epoxide monomers, the epoxide derivatives comprise ethylenically unsaturated glycidyl monomers containing a glycidyl group or epoxide group having a generalized formula:

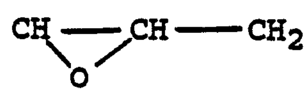

and

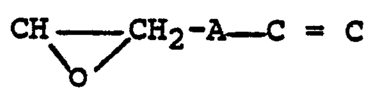

where the epoxide group and double bond preferably are terminal groups and A is a chain intermediate. The indicated ethylenic unsaturation, however, can be terminal, pendant, or internal chain unsaturation. Epoxide monomers are glycidyl lower alkyl acrylates comprising glycidyl reaction products of alkyl acrylic acid and include for instance glycidyl ethers or esters of methyl acrylate, or methacrylate, ethyl acrylate or methacrylate, propyl acrylates or methacrylic, butyl acrylates or methacrylates, 2-methylhexyl acrylate or methacrylate, n-octyl acrylate or methacrylate, 2-ethylhexyl acrylate or methacrylate, or similar glycidyl alkyl acrylates or methacrylates.

Other ethylenically unsaturated monomers contain carbon-to-carbon double bond unsaturation and include for instance vinyl monomers, acrylic monomers, allylic monomers, and acrylamide monomers. Vinyl esters include vinyl acetate, vinyl propionate, vinyl butyrates, vinyl benzoates, vinyl isopropyl acetates and similar vinyl esters; vinyl halides include vinyl chloride, vinyl fluoride, and vinylidene chloride; vinyl aromatic hydrocarbons include styrene, methyl styrenes and similar lower alkyl styrenes, chlorostyrene, vinyl toluene, vinyl naphthalene, divinyl benzoate, and cyclohexene; vinyl aliphatic hydrocarbon monomers include alpha olefins such as ethylene, propylene, isobutylene, and cylohex as well as conjugated dienes such as 1,3 butadiene, methyl-2-butadiene, 1,3-piperylene, 2,3-dimethyl butadiene, isoprene, cyclopentadiene, and dicyclopentadiene; and vinyl alkyl ethers include methyl vinyl ether, isopropyl vinyl ether, n-butyl vinyl ether, and isobutyl vinyl ether. Acrylic monomers include monomers such as lower alkyl esters of acrylic or methacrylic acid having an alkyl ester portion containing between 1 to 12 carbon atoms as well as aromatic derivatives of acrylic and methacrylic acid. Useful acrylic monomers include, for example, methyl acrylate and methacrylate, ethyl acrylate and methacrylate, butyl acrylate and methacrylate, ethyl acrylate and methacrylate, butyl acrylate and methacrylate, propyl acrylate and methacrylate, 2-ethyl hexyl acrylate and methacrylate, cyclohexyl acrylate and methacrylate, decyl acrylate and methacrylate, isodecylacrylate and methacrylate, benzyl acrylate and methacrylate, and hydroxyl alkyl acrylates and

methacrylates such as hydroxyethyl and hydroxypropyl acrylates and methacrylates. Other ethylenic monomers can include n-alkylol amides including acrylamides or methacrylamides such as N-methylol acrylamide, N-ethanol acrylamide, N-propanol acrylamide, N-methylol methacrylamide, N-ethanol methacrylamide, and similar alkyl acrylamide or methacrylamide monomers containing methyl, ethyl, propyl, n-butyl or iso-butyl alkyl groups; and functional monomers other than carboxyl monomers and can include hydroxyl functional groups containing monomers, for instance hydroxyl containing monomers such as hydroxy containing ethylenically unsaturated monomers including hydroxy alkyl acrylates such as 2-hydroxy ethyl acrylate and methacrylate, 2-hydroxypropyl acrylate and methacrylate, and similar hydroxy alkyl acrylates.

In accordance with this invention, the foregoing monomers are copolymerized by suspension polymerization in an aqueous medium in the presence of a tertiary mercaptan at temperatures preferably between 30°C. and 90°C. Tertiary mercaptans are alkyl or aromatic tertiary mercaptans of the general structure $HSCR^1R^2R^3$, where $R_1$, $R_2$, and $R_3$ can be linear alkane, branched or cyclic alkane, or aromatic and include preferred mercaptans containing an alkyl group having between 4 and 20 carbon atoms and include for example t-octyl, t-dodecyl, t-hexadecyl or similar tertiary alkyl mercaptans. Other useful tertiary mercaptans can include 2-ethyl, 2-mercapto decane, 1-alkyl cyclohexyl mercaptans, 2-benyl, 2-mercaptodecane and the like. On a weight basis, broadly between 0.1% and 15% but preferably between 2% and 5% tertiary mercaptan is added based on the weight of copolymerized monomers. The monomers preferably comprise between 0% and 20% (preferably 1% and 10%) methacrylic or acrylic acid, between 5% and 50% glycidyl acrylate or methacrylate monomer (preferably between 10% and 30%), and the remaining being other ethylenically unsaturated monomers.

In practicing this invention, the monomer mixture is combined with a radical initiator which generally is soluble in the monomer mixture and insoluble in water. The monomer mixture is added to the aqueous phase which contains a suspending aid. Generally, the monomer mixture is added all at once, but the addition can be staged or drawn out over a period of hours. Suitable free radical initiators include, for example, peroxides such as benzoyl peroxide, tert-butyl peroxide, cumene hydroperoxide, tetralin hydroperoxide, diisopropyl benzene hydroperoxide, acetyl peroxide, urea peroxide, methyl ethyl ketone peroxide, diisopropyl peroxy dicarbonate, hexachloroethane/tetraborate (1%/1%), hydrazine sulfate (3%), sodium persulfate/sodium tetraborate (1%/1%), dibenzoylhydrazine (5%), and tetraethyllead (3%). Azo initiators are especially suitable. Useful azo initiators include azobis-dimethylvaleronitrole, azobisisobutyronitrile, and the like, and mixtures thereof. The proportion of free radical initiator by weight of the mixture of monomers in the process is at least about 0.2 and preferably between about 1-3%.

Various suspending aids can be used. Examples include water soluble organic polyesters such as polyvinyl alcohol, polyacrylic acid, polyvinyl pyrrolidone, styrene maleic anhydride copolymers; cellulose derivatives such as hydroxyethyl cellulose, and methylcellulose; naturally occurring polymers such as starches and xanthan gum; and finely divided powders such as talc, clays, silicas, carbonates and the like. Small amounts of surfactants can be used with the above suspending aids to enhance stability and control particle size.

Suspension polymerization can be carried out at temperatures of around 30°C. to 90°C. but preferably between 50°C. and 70°C. in accordance with this invention, using a monomer to water weight ratio of about 0.1 to 1.5:1 and preferably of about 0.3 to 1:1 with reaction times being from about 2 to 6 hours. Typically, the initiator and monomer mixture are blended and added to the aqueous medium either as an entire lot or with metered additions of the monomer mixture to the aqueous medium. Alternatively, the suspending aid and initiator may be initially dispersed in the aqueous medium prior to the addition of the monomer mixture thereto. Particle size in the suspension can be controlled by the type and/or quantity of suspension aid used, or by agitation. Homogenization can be used to reduce particle size prior to polymerization. Conventional suspension polymerization is suitable for use in the present invention.

In accordance with this invention, a glycidyl or glycidyl and acid functional acrylic resin is prepared by suspension polymerization to produce a pigmentable powder coating. The use of tertiary mercaptan chain transfer agents with polymerization temperature control between about 50°C. and 80°C. produces a resin with negligeable crosslinking from acid/epoxy reactions, and less epoxy consumption than similar batches prepared with alkane and hydroxy alkane mercaptans. Tertiary mercaptans also have better efficiency in controlling product cone-and-plate viscosities. Best results were obtained with copolymers containing from 1 to 10% methacrylic acid, from 5 to 50% glycidyl methacrylate, and from 1 to 5% t-dodecyl mercaptan. Methacrylic acid contents of about 1% and higher provide excellent pigment wetting during powder coating processing. Powder coatings can be made with glycidyl and acid copolymers and then cured with only copolymerized acid, but the addition of 1,10-decane dicarboxylic acid (DDA) provides better gloss and less textures.

Suspension glycidyl acrylic resins for powder coatings can be prepared with cone-and-plate viscosities of 1 to 50 poise at 200°C, (ICI Cone-and-Plate Viscometer, #40 cone). Resins with measured viscosities in this range are most suitable for processing into powder coatings, although this invention is not limited to polymers having 200°C. cone-and-plate viscosities in this range. Copolymers of glycidyl and acid functional monomers will melt at 200°C., although the acid and glycidyl groups react too fast to obtain a good measure of the cone-and-plate viscosity. Cone-and-plate viscosities can be easily controlled by adjusting the concentration of tertiary mercaptan used during polymerization. Concentrations of 2 to 5% t-dodecylmercaptan will give cone-and-plate viscosities of from about 50 to 10 poise, depending on the monomer mix used. Various tertiary mercaptans such as t-octyl, t-dodecyl, t-hexadecyl may be used. The general structure of $HSC\text{-}R^1R^2R^3$ is required, with $R^1$, $R^2$, and $R^3$ being aromatic and aliphatic compounds of various types. Higher aliphatic R groups such as dodecyl and hexadecyl are preferred. It is believed that R groups with hydroxy functionality would be equally effective. Acrylic polymers prepared with the mercaptans described above can contain from 0.5 to 40% by weight or higher glycidyl acrylate or methacrylate, but 5 to 30% glycidyl methacrylate is preferred.

Copolymerized acids such as acrylic, methacrylic, maleic, and other carboxylic acid and acid anhydrides containing reactive vinyl or allyl groups contained in the copolymer may range from 0 to 20% or higher. Clear coatings are best prepared with no copolymerized acid, while pigmentable resins are usually best with 2% to 5% acid monomer. Acid and glycidyl monomers can be copolymerized with any number of other monomers to obtain desired properties such as polymer Tg, weathering, hydrolytic stability, cost and the like. Examples include styrene, methacrylic monomers, acrylic monomers and the like. Various initiators can be used such as azo initiators, peroxy compounds, peresters, redox systems, and the like. Good results were obtained with Vazo 52 (DuPont), a low temperature azo initiator.

The glycidyl acrylic binder produced by suspension polymerization in accordance with this invention, can be thoroughly and uniformly mixed with raw batch ingredients by homogenizing the binders, pigmentary solids, plasticizers and other components to uniformly blend the resinous binder with the pigmentary solids. Pigments can ordinarily include opacifying pigments such as titanium dioxide, zinc oxide, leaded zinc oxide, titanium calcium, as well as tinting pigment such as carbon black, yellow oxides, brown oxides, tan oxides, raw and burnt sienna or umber, chromium oxide green, phthalocyanine green, phthalonitrile blue, ultramarine blue, cadmium pigments, chromium pigments, and the like. Filler pigments such as clay, silica, talc, mica, wollastonite, and the like can be added. The raw batch ingredients can be thoroughly mixed in high intensity mixer such as a frustoconical agitator whereby the materials are discharged in a uniform mixture. The high intensity mixer discharges the batch components to a heated compounding extruder wherein the extruder is internally heated by an indirect heating fluid such as steam, hot water, or synthetic oil whereupon the exit extruder temperature is regulated according to the type of powder paint being produced but generally is between about 70°C. and 140°C. at the heated exit die of the screw fed extruder. The extrudate emerges from the extruder as a ribbon of less than about 1/16" thickness which passes onto a water cooled stainless steel conveyor belt whereby the plastic ribbon extrudate fully hardens. The cooled extrudate then passes through a mechanical commuter disposed at the end of the cooled stainless steel belt to efficiently break the fragile brittle ribbon into very small flakes. The small flakes are then discharged onto a cooled mill, such as a hammer mill, to grind the small particles onto powder paint of less than 120 mesh and preferably passing a 140 mesh U.S. Standard sieve screen whereupon the powder can be further classified into particle size if desired.

Powder paints produced in accordance with this invention can be applied electrostatically to a steel panel substrate and baked at temperatures of about 300°F. to 400°F. for about 10 to 45 minutes.

Powder coatings prepared with glycidyl and acid copolymers in accordance with this invention can be cured to form hard, solvent resistant coatings, but films tend to be somewhat textured and low in gloss. DDA can be added to these copolymers as a crosslinking agent at 0 to about 30% to produce films significantly smoother and higher in gloss. Best results are obtained with copolymers that have from 5% to 30% glycidyl methacrylate and from 1% to 5% methacrylic acid. DDA was generally added in quantities such that the molar concentrations of copolymerized acid and the DDA equals molar concentration of glycidyl although this is merely preferred. DDA does not interfere with the ability of the resin to wet pigment and coatings with exceptionally good impact resistance have been prepared in accordance with this invention.

The merits of this invention are further illustrated by the following examples.

**EXAMPLES**

1. Prepare the following:
a) 11,640 g. deionized water
19.4 g. Vinol 540, polyvinyl alcohol (Air Products)
1 g. $H_3PO_4$
b) 620.6 g. glycidyl methacrylate
155 g. methacrylic acid
1474 g. butyl methacrylate
853 g. methylmethacrylate
776 g. styrene
194 g. t-dodecyl mercaptan
77.6 g. Vazo 52 (DuPont)
c) 100 g. $H_2O_2$, 30% in $H_2O$

Dissolve polyvinyl alcohol in a portion of the water, and add with rest of a) to a 5 gallon reactor. Purge with nitrogen and heat to 50°C. over 1 hour. Add b) all at once to reactor. Hold 1 hour at 50, 1 hour at 55, 1 hour at 60, and then 1 hour at 65°C. add c) and hold 1 hour more at 65°C. Cool and pour into 5 gallon pail. Decant water from top after product has settled. Air dry as a 1-2 inch cake in shallow pans.

2. Prepare polymer as in 1), but with 20 GMA/2 MAA, 34 BMA/24 MMA/20 ST monomer mix.
3. Prepare polymer as in 1), but with 12 GMA/7.5 MAA/43 BMA/18 MMA/19.5 ST monomer mix.
4. Prepare polymer as in 1) but with 25 GMA/2 MAA/20 ST/16 MMA/37 BMA monomer mix.
5. Prepare polymer as in 1), but with 25 GMA/30 BMA/25 ST/20 MMA monomer mix.
6. Prepare the following:
a) deionized water 300 g.
polyvinyl alcohol, Vinol 540 0.5 g.
b) Vazo 64 (DuPont) 2.0 g.
t-dodecyl mercaptan 5.0 g.
glycidyl methacrylate 25 g.
styrene 25 g.
butyl methacrylate 30 g.
methyl methacrylate 20 g.

Prepare as in 1), but hold one hour at these temperatures: 60°C., 65°C., 70°C., 75°C. Add no $H_2O_2$.

7. Form powder coating from 1) through 5) above as follows:

Method A

1343 g. product from example 1) above
156 g. 1,10-decane dicarboxylic acid (DDA)
7.6 g. benzoin
15.1 g. Modiflow PL-200
1035 g. RCL-9 (SCM Pigments, $TiO_2$)

Premix the above with a high shear blender at room temperature. Pass the premix through an extruder at 80°C. Cool and then grind with liquid nitrogen to hold 20°C. in a Bantam Micropulverizer. Sieve and collect all powder which passes 140 mesh. Apply to cold roll steel test panels with electrostatic spray. Bake coatings at 350°F. for 20 minutes. (Clear coatings prepared as above, but omit RCL-9.)

Method B

50 g. polymer from example 1, above
4.5 g. D.D.A. acid

Blend in a Vita Mix high speed blender for 30 seconds on high setting. Collect fines through a 120 mesh sieve. Electrostatically spray on panel and bake as above.

TABLE 1

Powder Paint Formulation

| Example | Polymer From Example | Polymer | DDA | Pigmented | Method |
|---|---|---|---|---|---|
| 8 | 1 | 50 g | 4.5 g | No | B |
| 9 | 2 | 50 g | 8.0 g | No | B |
| 10 | 3 | 50 g | 0 | No | B |
| 11 | 4 | 1253 g | 247 g | Yes | A |
| 12 | 5 | 2000 g | 415 g | No | A |
| 13 | 1 | 1947 | 226 g | Yes | A |

TABLE 2

Powder Coating Properties

| Example | 60° Gloss | MEK Double Rubs | Mandrel Bend* | Impact** | Pencil Hardness |
|---|---|---|---|---|---|
| 8 | 78% | 100+ | no cracks | 20 in. | 16 H |
| 9 | 80% | 100 | no cracks | 20 | H |
| 10 | 33% | 100+ | fine cracks | 15 | B |
| 11 | 80% | 100+ | no cracks | 70 | H+ |
| 12 | 100% | 100+ | no cracks | 20 | H |
| 13 | 75% | 100+ | few cracks | 15 | F |

*Conical mandrel bend down to 1/8".

**Direct impact, 5/8" ball.

Table 3

| Example* | Mercaptan | Active Glycidyl** |
|---|---|---|
| 14 | 5% tertiarydodecyl mercaptan | 98-100% |
| 15 | 5% n-dodecyl mercaptan | 91% |
| 16 | 5% mercapto ethanol | 75% |

*Prepare as in Example 5.

**Titrated epoxy (perchloric acid titrant, tetraethyl ammonium bromide and crystal violet indicator, chlorobenzene solvent).

Table 4

| Example | Acidic Comonomer* | Comments** |
|---|---|---|
| 17 | acrylic acid | soluble product,hard |
| 18 | maleic anhydride | low conversion,soluble |
| 19 | fumaric acid | soluble product,hard |
| 20 | itaconic acid | soluble product,hard |

*Prepare as in Example 4 with 2% of these acidic comonomers.

**Products were all readily soluble in methylethylketone, indicating that no significant acid-glycidyl reaction had occurred. Product form was good. All polymers but the maleic anhydride copolymer were suitable for processing into a powder coating without further development.

## Claims

1. A process for copolymerizing ethylenically unsaturated monomers to produce powder coatings, which comprises:

copolymerizing ethylenically unsaturated monomers, including glycidyl acrylic monomers, by an aqueous suspension polymerization process in the presence of a polymerization initiator and between 0.1% and 15% tertiary mercaptan transfer agent based on the weight of monomers copolymerized, the ethylenically unsaturated monomers comprising on a weight basis between 0% and 20% ethylenically unsaturated acid, between 5% and 50% glycidyl acrylate or methacrylate monomer, and the remaining being other ethylenically unsaturated monomers to produce a resulting suspension polymer; and

said resulting polymer is comminuted to form powder paint having a particle size less than about 105 microns.

2. A process according to claim l, wherein the resulting suspension polymer is pigmented prior to the step of comminuting.

3. A process according to either of the preceding claims, wherein the tertiary mercaptan is used at a level between 2% and 5% based on the weight of copolymerized monomers.

4. A process according to any one of the preceding claims, wherein up to 30% by weight 1,10-decane dicarboxylic acid combined with the resulting suspension polymer.

5. A process according to any one of the preceding claims, wherein the ethylenically unsaturated monomers comprise between 1% and 10% methacrylic acid, between 5% and 50% glycidyl methacrylate, and the remaining being other ethylenically unsaturated monomers.

6. A process according to any one of the preceding claims, wherein the polymerization of monomers is at temperatures between 30°C. and 90°C.

7. A process according to any one of the preceding claims, wherein the monomer to water ratio in the aqueous suspension process is between 0.1 and 1.5 weight parts monomer to 1 weight part water.

8. A suspension polymer useful in powder coating and produced in accordance with the process of any one of the preceding claims, wherein the polymerization temperature was between 30°°C. and 90°C. to preclude acid reaction with glycidyl groups to produce a non-gelled resulting suspension polymer comprising on a weight basis copolymerized monomers of 0% to 20% ethylenically unsaturated acid, 5% to 50% glycidyl acrylate or methacrylate, and the remaining being other ethylenically unsaturated monomer.

9. A suspension polymer used in powder coating and produced in accordance with the process of any one of claims 1-7, to produce a resulting suspension polymer with negligible loss in glycidyl functionality wherein tertiary mercaptan in the process provides product melt viscosity control without loss of glycidyl functionality by avoiding mercaptan reactions with glycidyl groups, said suspension polymer comprising on a weight basis copolymerized monomers of 0% to 20% ethylenically unsaturated acid, 5% to 50% glycidyl acrylate or methacrylate, and the remaining being other ethylenically unsaturated monomer.